# EUROPÄISCHE PATENTSCHRIFT

(11) **EP 0 801 388 B1**
(45) Veröffentlichungstag und Bekanntmachung des Hinweises auf die Patenterteilung: **05.03.2008**
(21) Anmeldenummer: 97200991.4
(22) Anmeldetag: 04.04.1997
(51) Int. Cl.: G11B 27/022, G11B 27/032, G11B 27/031

(54) **Editieranordnung**
Editing device
Dispositif de montage

(30) Priorität: 12.04.1996 DE 19614408
(43) Veröffentlichungstag der Anmeldung: 15.10.1997
(73) Patentinhaber: BTS Holding International B.V., 4827 HG Breda (NL)
(72) Erfinder: Schmidt, Adam, Röntgenstrasse 24, 22335 Hamburg (DE); Hasenzahl, Markus, Röntgenstrasse 24, 22335 Hamburg (DE)
(74) Vertreter: Ruellan-Lemonnier, Brigitte

(56) Entgegenhaltungen:
- EP-A- 0 438 299
- US-A- 5 563 866

## Beschreibung

Die Erfindung betrifft eine zum Editieren von auf einer Datenspeicheranordnung abgespeicherten Video-Daten, wobei die Video-Daten mittels zugeordneten Timecode-Daten markiert sind, und wobei die Editieranordnung beim Editieren eine Schnittliste erstellt.

Derartige Editieranordnungen werden sowohl im Studio- als auch im Consumerbereich eingesetzt, um auf einer Datenspeicheranordnung, beispielsweise einem Magnetbandgerät oder einer Speicherplatte eines Datenverarbeitungsgerätes, vorliegende Video- und meist zugeordnete Audio-Daten zu editieren. Unter Editieren wird dabei verstanden, daß die Video-Daten und ggf. zugeordnete Audio-Daten nur ausschnittsweise und ggf. auch umgeordnet in eine Schnittliste eingetragen werden. Dabei werden die Daten in der Schnittliste anhand von Timecode-Daten, die den Video-Daten zugeordnet sind und die ebenfalls in der Datenspeicheranordnung abgespeichert sind, gekennzeichnet. In der Schnittliste sind verschiedene Editierabschnitte vorgesehen. Für jeden Editierabschnitt sind meist zwei Timecodewerde eingetragen, nämlich der Timecodewert des ersten Bildes der Video-Daten des Editierabschnittes und derjenige des letzten Bildes dieser Daten. Auf die in der Datenspeicheranordnung abgespeicherten Video-Daten kann dabei in beliebiger, auch umgeordneter Weise, zugegriffen werden. Gegebenenfalls kann auch auf mehrere in der Datenverarbeitungsanordnung abgespeicherte Video-Takes zugegriffen werden. Anhand der Schnittliste werden dann über einen Wiedergabevorgang die Daten entsprechend der in die Schnittliste eingetragenen Timecode-Werte aus der Datenverarbeitungsanordnung ausgelesen und entweder unmittelbar wiedergegeben oder mittels einer anderen Speichereinrichtung abgespeichert.

Bekannte Editieranordnungen arbeiten in der Weise, daß sie sich beim Erstellen der Schnittliste immer unmittelbar anhand der Timecode-Daten orientieren, die in der Datenspeicheranordnung den Video-Daten zugeordnet sind. EP 438 299 A2 offenbart ein Beispiel einer solchen Editier anordnung.

Es ist Aufgabe der Erfindung, eine Editieranrodnung der eingangs genannten Art dahingehend weiterzuentwickeln, daß das Zusammenstellen einer Schnittliste vereinfacht wird.

Diese Aufgabe ist erfindungsgemäß dadurch gelöst, daß die Editieranordnung bei Erstellung einer neuen Schnittliste eine Kennzeichnung der für einen Editierabschnitt vorgesehenen Daten alternativ entsprechend der diesen Daten in der Datenspeicheranordnung zugeordneten Timecode-Daten oder mittels Bezugnahme auf wenigstens einen Teil wenigstens einer bereits existierenden Schnittliste, in der eine Kennzeichnung derselben Daten bereits erfolgt ist, vornimmt, wobei innerhalb einer zu erstellenden Schnittliste jeweils für einen Editierabschnitt eine der Erstellungsarten wählbar ist, beide Erstellungsarten jedoch innerhalb der Schnittliste gemischt einsetzbar sind.

Die erfindungsgemäße Editieranordnung bietet einzeln für jeden Editierabschnitt zwei Möglichkeiten der Kennzeichnung der Video-Daten, die dieser Editierabschnitt kennzeichnen soll. Einerseits besteht in an sich bekannter Weise die Möglichkeit, die Video-Daten für einen Editierabschnitt anhand der in der Datenspeicheranordnung den Video-Daten zugeordneten Timecode-Daten vorzunehmen. Soll also ein bestimmter Abschnitt von Video-Daten in der Datenspeicheranordnung einem Editierabschnitt zugeordnet werden, so werden die entsprechenden Timecode Anfangs- und Endwerte, die in der Datenspeicheranordnung den Video-Daten zugeordnet sind, in die Schnittliste eingetragen.

Darüber hinaus bietet die erfindungsgemäße Editieranordnung die Möglichkeit, einen Editierabschnitt dadurch zu kennzeichnen, daß eine Bezugnahme auf wenigstens einen Teil einer bereits existierenden Schnittliste erfolgt. Es werden in diesem Falle nicht unmittelbar die Daten aus der Datenspeicheranordnung übernommen, sondern es wird auf die Schnittliste Bezug genommen. Dabei können für denjenigen Teil der Video-Daten, der in die neu zu erstellende Schnittliste übernommen werden soll, die Timecode Anfangs- und Endwerte in die neu zu erstellende Schnittliste übernommen werden. Dieser zu übernehmende Teil aus der bereits existierenden Schnittliste kann seinerseits mehrere verschiedene Abschnitte aus den Video-Daten der Datenspeicheranordnung enthalten. Es kann sich bei diesem Abschnitt also bereits um verschiedene Takes von Video-Daten handeln, die zusammengestellt wurden.

Durch diese Bezugnahme auf eine vollständige bereits existierende Schnittliste oder einen Teil einer solchen existierenden Schnittliste kann für die neu zu erstellende Schnittliste ein erheblicher Teil von Daten und damit von Aufwand bei der Erstellung eingespart werden, da die ggf. übernommenen Teile einer existierenden Schnittliste nicht neu zusammengestellt werden müssen.

In der Praxis tritt damit der Vorteil auf, daß beispielsweise bereits zusammengestellte Beiträge in neu zu erstellende Beiträge ganz oder teilweise übernommen werden können, ohne daß diese Beiträge ihrerseits wieder anhand den in der Datenspeicheranordnung abgespeicherten Video- und Timecode-Daten neu zusammengestellt werden müssen.

Innerhalb einer Schnittliste kann die Wahl zwischen diesen beiden Arten der Kennzeichnung der Daten frei erfolgen. D.h. innerhalb einer Schnittliste können beide Arten gemischt werden. Für jeden einzelnen Editierabschnitt muß jedoch festgelegt werden, welche Art der Kennzeichnung für diesen Editierabschnitt erfolgen soll.

Für eine Ausgestaltung der Erfindung ist vorgesehen, daß die Editieranordnung eine Kennzeichnung der für einen Editierabschnitt vorgesehenen Daten anhand einer bereits erstellten Schnittliste in der Weise vornimmt, daß für den betreffenden Editierabschnitt in der zu erstellenden Schnittliste auschließlich auf die bereits existierende Schnittliste verwiesen wird.

Um die oben genannten Vorteile zu intensivieren, genügt es für diejenigen Editierabschnitte, für die eine Bezugnahme auf wenigstens einen Teil einer bereits existierenden Schnittliste erfolgen soll, daß ausschließlich auf diese existierende Schnittliste bzw. den Teil der existierenden Schnittliste und die dort eingetragenen Timecode-Daten verwiesen wird. Weitere Informationen werden vorteilhafter Weise nicht abgespeichert, um die Erstellung der neuen Schnittliste einfach zu gestalten.

Gemäß einer weiteren Ausgestaltung der Erfindung ist für die Editieranordnung vorgesehen, daß in dieser Basis-Listen für Daten und diesen zugeordnete Timecodes existieren und daß die Editieranordnung für eine Kennzeichnung der für einen Editierabschnitt vorgesehenen Daten entsprechend der diesen Daten in der Datenspeicheranordnung zugeordneten Timecode-Daten auf die Basis-Listen zurückgreift.

Die oben erwähnte, an sich bekannte Möglichkeit, in den Editierabschnitten eine Kennzeichnung der Video-Daten unmittelbar entsprechend der den Video-Daten in der Datenspeicheranordnung zugeordneten Timecode-Daten vorzunehmen, wird hier dahingehend weiterentwickelt, daß in der Editieranordnung für die Video-Daten, die in der Datenspeicheranordnung abgespeichert sind, bereits Basislisten existieren, die die den Video-Daten zugeordneten Timecode-Daten enthalten. Diese Basislisten stellen damit quasi eine Art Abbild der Timecodewerte dar, wie sie in der Datenspeicheranordnung abgespeichert werden. Der Vorteil für die Editieranordnung besteht dabei darin, daß für den Editiervorgang und die Erstellung der Schnittliste unmittelbar auf die in der Editieranordnung abgespeicherten Timecodewerte zugegriffen werden kann und ein Zugriff auf die Datenspeicheranordnung entfällt.

Gemäß einer weiteren Ausgestaltung der Erfindung ist vorgesehen, daß die Editieranordnung ein non-lineares Editieren vornimmt.

Der Begriff non-lineares Editieren ist üblich geworden für Editiervorgänge im Zusammenhang mit solchen Datenspeicheranordnungen, die sehr geringe Zugriffszeiten aufweisen, beispielsweise Plattenspeicheranordnungen von Datenverarbeitungsanlagen bzw. Personalcomputern. Diese weisen den Vorteil auf, daß einerseits bei der Erstellung der Schnittliste sehr viel kürzere Wartezeiten für die Zusammenstellung der einzelnen Takes auftreten und daß für den Wiedergabevorgang, d.h. beim Abarbeiten der Schnittliste, nur sehr geringe oder keine sichtbaren Wartezeiten auftreten, so daß beispielsweise für einen sendefähigen Beitrag keine Zwischenspeicherung vor dem Senden erforderlich ist, sondern der Beitrag unmittelbar anhand der Daten der Schnittliste beim Senden zusammengestellt und wiedergegeben wird. Insbesondere für derartige professionelle Einsatzzwecke kommen die Vorteile der erfindungsgemäßen Editieranordnung besonders zum Tragen, da sie eine weitere Möglichkeit der Zeitersparnis bietet.

Für eine weitere Ausgestaltung der Erfindung ist für eine Wiedergabeanordnung vorgesehen, daß diese die Video-Daten aus der Datenspeicheranordnung gemäß den in der Schnittliste eingetragenen Daten vornimmt, wobei für jeden Editierabschnitt dieses Auslesen der Video-Daten je nach Art der für den Editierabschnitt vorgesehenen Bezugnahme entweder entsprechend der in dem Editierabschnitt eingetragenen und in der Datenspeicheranordnung (1) den Video-Daten zugeordneten Timecode-Daten oder entsprechend einer Bezugnahme auf wenigstens einen Teil einer bereits existierenden Schnittliste (5) erfolgt.

Die Wiedergabeanordnung liest die Video-Daten in dem einen Fall anhand der in der Schnittliste eingetragenen Timecode-Daten entsprechend der Zuordnung dieser zu den Video-Daten in der Datenspeicheranordnung aus. Im anderen Fall orientiert sich die Wiedergabeanordnung anhand der bereits existierenden Schnittliste, auf die Bezug genommen wird. In dieser Schnittliste sind die erforderlichen Daten eingetragen und anhand dieser Daten werden die Video-Daten aus der Datenspeicheranordnung ausgelesen.

Nachfolgend wird ein Ausführungsbeispiel der Erfindung näher erläutert. Es zeigen:
Fig. 1 eine schematische Darstellung, welche das Zusammenspiel einer Editieranordnung, Datenspeicheranordnung, Wiedergabeanordnung, einer bereits erstellten und einer zu erstellenden Schnittliste zeigt,
Fig. 2 eine schematische Darstellung, die einige Video-Daten und zugeordnete Timecode-Daten zeigt, die in einer Datenspeicheranordnung abgespeichert sind bzw. in bereits erstellten oder zu erstellenden Schnittlisten markiert sind bzw. werden.

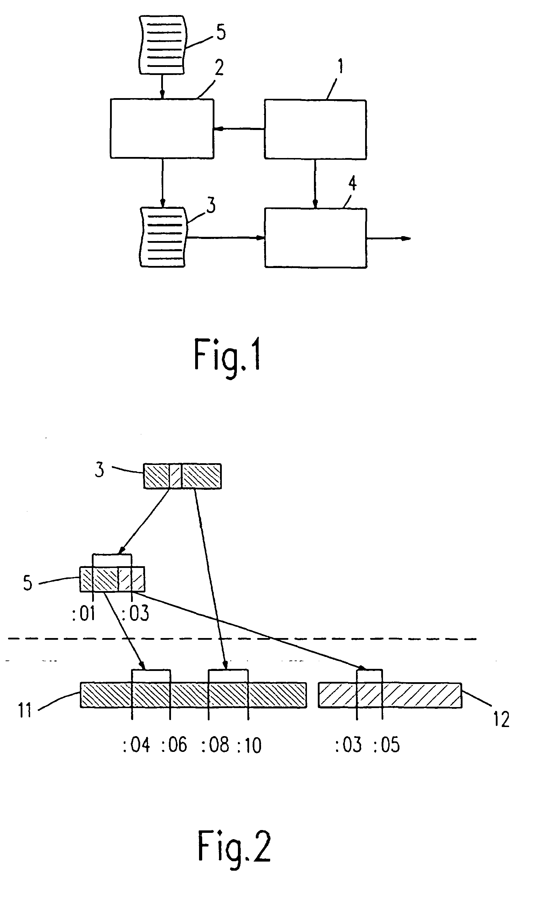

Die schematische Darstellung gemäß Fig. 1 zeigt eine Datenspeicheranordnung 1, in der Video- und ggf. zugeordnete Audio-Daten sowie ggf. weitere Daten abgespeichert sind. Die Video-Daten sind durch Timecode-Daten gekennzeichnet.

Auf diese in der Datenspeicheranordnung 1 abgespeicherten Daten kann eine Editieranordnung 2 zugreifen. Die Editieranordnung 2 dient dazu, sogenannte Schnittlisten zu erstellen, in welchen einzeln für Editierabschnitte jeweils angegeben wird, welche Video-Daten entsprechend dem Editierabschnitt wiederzugeben sind.

In der schematischen Darstellung gemäß Fig. 1 sind ferner eine bereits früher erstellte Schnittliste 5 sowie eine aktuell erstellte Schnittliste 3 symbolisch dargestellt.

Eine in der Fig. 1 angedeutete Wiedergabeanordnung 4 kann auf die aktuell erstellte Schnittliste 3 sowie die Daten, die in der Datenspeicheranordnung 1 abgespeichert sind, zugreifen.

Die Editieranordnung 2 kann bei der Erstellung einer Schnittliste in an sich bekannter Weise unmittelbar die für einen Editierabschnitt zu kennzeichnenden Video-Daten in diesem Editierabschnitt anhand der den Video-Daten in der Datenspeicheranordnung 1 zugeordneten Timecode-Daten kennzeichnen. Es besteht aber auch die Möglichkeit, auf die Daten einer bereits erstellten Schnittliste 5 zuzugreifen. Diese Wahl besteht einzeln für jeden Editierabschnitt.

Dies bedeutet, daß in der aktuell zu erstellenden Schnittliste 3 in einem Editierabschnitt entweder unmittelbar Bezug genommen wird auf die Timecode-Daten, die den Video-Daten in der Datenspeicheranordnung 1 zugeordnet sind, oder daß auf eine bereits existierende Schnittliste 5 ganz oder teilweise Bezug genommen wird. Wenigstens bei nur teilweisem Bezug auf eine existierende Schnittliste sind die Anfangs- und Ende-Timecodewerte desjenigen Teils der existierenden Schnittliste, der in die neu zu erstellende Schnittliste 3 übernommen werden soll, in diese neu zu erstellende Schnittliste 3 zu übernehmen.

Innerhalb einer Schnittliste können diese beiden Arten der Bezugnahme gemischt erfolgen, jedoch muß für jeden einzelnen Editierabschnitt eine Bezugnahme-Art festgelegt werden.

Zum Abarbeiten bzw. Wiedergeben von Daten entsprechend einer solchen Schnittliste greift die Wiedergabeanordnung 4 auf die Daten der Schnittliste 3 sowie der bereits früher erstellten Schnittliste 5 zurück. Ist in der aktuell erstellten Schnittliste 3 für einen Editierabschnitt eine Bezugnahme auf die früher erstellte Schnittliste 5 eingetragen, so greift die Wiedergabeanordnung 4 für diesen Editierabschnitt auf die Daten der existierenden Schnittliste 5 zurück. In beiden Fällen wird anhand der Daten der Schnittliste 3 oder 5 ein Auslösen der entsprechenden Video-Daten aus der Datenspeicheranordnung 1 ausgelöst. Diese Daten stellt die Wiedergabeanordnung ausgangsseitig zur Verfügung.

Bei Anordnungen, die zum non-linearen Editieren geeignet sind, kann dieser Wiedergabevorgang so schnell erfolgen, daß eine Zwischenspeicherung auf eine weitere Speicheranordnung nicht erforderlich ist.

Anhand der schematischen Darstellung in Fig. 2 soll die Erstellung einer Schnittliste näher erläutert werden, in der beide Arten der Bezugnahme gemischt werden.

Die Darstellung gemäß Fig. 2 zeigt unten zwei Video-Abschnitte 11 und 12, deren Daten in der Datenspeicheranordnung 1 entsprechend Fig. 1 abgespeichert sind. Diesen Video-Abschnitten 11 und 12 sind jeweils Timecode-Daten zugeordnet, die ebenfalls in der Datenspeicheranordnung 1 gemäß Fig. 1 abgespeichert sind.

In der schematischen Darstellung gemäß Fig. 2 sollen diese Video-Abschnitte 11 und 12 nicht vollständig, sondern nur teilweise in eine zu erstellende Schnittliste 3 aufgenommen werden.

Die entsprechenden Segmente der Video-Abschnitte 11 und 12 sind in der Fig. 2 durch Timecode-Anfangs- und Endwerte gekennzeichnet. In dem Video-Abschnitt 11 sind die Segmente vom Timecodewert :04 bis :06 sowie vom Segment :08 bis :10 gekennzeichnet. Aus dem Video-Abschnitt 12 soll das Segment vom Timecodewert :03 bis :05 in die neu zu erstellende Schnittliste 3 übernommen werden. Dabei soll das Segment :04 bis :06 des ersten Video-Abschnittes 11 und das Segment :03 bis :05 des zweiten Video-Abschnittes 12 nur teilweise in die neu zu erstellende Schnittliste 3 eingetragen werden.

Wie die schematische Darstellung gemäß Fig. 2 zeigt, existiert eine bereits früher erstellte Schnittliste 5, in die die Segmente :04 bis :06 des Video-Abschnittes 11 und :03 bis :05 des Video-Abschnittes 12 bereits übernommen wurden. Da eben diese Abschnitte auch in die neu zu erstelltende Schnittliste 3 teilweise übernommen werden sollen, erfolgt für einen Editierabschnitt der neu zu erstellenden Schnittliste 3 eine Bezugnahme auf die bereits erstellte Schnittliste 5. Die in der bereits erstellten Schnittliste 5 zusammengestellten Editierabschnitte werden jedoch nur teilweise übernommen. Die Fig. 2 zeigt, daß nur der Timecode-Abschnitt :01 bis :03 der bereits existierenden Schnittliste 5 übernommen werden soll. Für diesen Abschnitt erfolgt in der neu zu erstellenden Schnittliste 3 eine entsprechende Bezugnahme.

Das Segment :08 bis :10 des ersten Video-Abschnittes 11 wird unmittelbar durch Bezugnahme der in der Datenspeicheranordnung abgespeicherten Timecodewerte in der neu zu erstellenden Schnittliste 3 gekennzeichnet.

In dem sehr einfach gehaltenen Beispiel entsprechend der Darstellung gemäß Fig. 2 wird für den ersten Editierabschnitt der neu zu erstellenden Schnittliste lediglich eine Bezugnahme auf einen Teil der bereits erstellten Schnittliste 5 erforderlich. In diesem Teil sind zwei Videodatensegmente enthalten, die in den beiden Videodaten-Abschnitten 11 und 12, wie sie in der Datenspeicheranordnung abgespeichert sind, enthalten sind. Durch die Bezugnahme auf die bereits existierende Schnittliste 5 entfällt eine anderenfalls erforderliche einzelne Bezugnahme auf die beiden Segmente in den Videodaten-Abschnitten 11 und 12. Bereits in diesem einfachen Beispielsfalle wird also eine anderenfalls zweifach vorzunehmende Bezugnahme auf Timecode-Daten entsprechend der Abspeicherung in der Datenspeicheranordnung ersetzt durch eine einfache Bezugnahme auf eine existierende Schnittliste. Es ist klar, daß bereits existierende Schnittlisten in der Regel erheblich mehr Segmente aufweisen werden, als in dem einfachen Beispiel gemäß Fig. 2. Es wird dann eine noch größere Vereinfachung bei der Erstellung der neu zu erstellenden Schnittliste 3 erzielt.

## Patentansprüche

1. Editieranordnung (2) zum Editieren von auf einer Datenspeicheranordnung (1) abgespeicherten Video-Daten, wobei die Video-Daten mittels zugeordneten Timecode-Daten markiert sind, und wobei die Editieranordnung (2) beim Editieren eine Schnittliste (3) erstellt, **dadurch gekennzeichnet,**
**daß** die Editieranordnung (2) bei Erstellung einer neuen Schnittliste (3) eine Kennzeichnung der für einen Editierabschnitt vorgesehenen Daten alternativ entsprechend der diesen Daten in der Datenspeicheranordnung (1) zugeordneten Timecode-Daten oder mittels Bezugnahme auf wenigstens einen Teil wenigstens einer bereits existierenden Schnittliste (5), in der eine Kennzeichnung derselben Daten bereits erfolgt ist, vornimmt, wobei innerhalb einer zu erstellenden Schnittliste (3) jeweils für einen Editierabschnitt eine der Erstellungsarten wählbar ist, beide Erstellungsarten jedoch innerhalb der Schnittliste (3) gemischt einsetzbar sind.

2. Editieranordnung nach Anspruch 1, **dadurch gekennzeichnet,**
**daß** die Editieranordnung (2) eine Kennzeichnung der für einen Editierabschnitt vorgesehenen Daten anhand einer bereits erstellten Schnittliste (5) in der Weise vornimmt, daß für den betreffenden Editierabschnitt in der zu erstellenden Schnittliste (3) auschließlich auf die bereits existierende Schnittliste (5) verwiesen wird.

3. Editieranordnung nach Anspruch 1 oder 2, **dadurch gekennzeichnet, daß** in der Editieranordnung (2) Basis-Listen für Daten und diesen zugeordnete Timecodes existieren und daß die Editieranordnung (2) für eine Kennzeichnung der für einen Editierabschnitt vorgesehenen Daten entsprechend der diesen Daten in der Datenspeicheranordnung (1) zugeordneten Timecode-Daten auf die Basis-Listen zurückgreift.

4. Editieranordnung nach einem der Ansprüche 1 bis 3, **dadurch gekennzeichnet, daß** die Editieranordnung ein non-lineares Editieren vornimmt.

5. Wiedergabeanordnung (4) zum Wiedergeben von in einer Datenspeicheranordnung (1) abgespeicherten Video-Daten entsprechend einer mittels einer Editieranordnung (2) nach einem der Ansprüche 1 bis 4 erstellten Schnittliste (3),
**dadurch gekennzeichnet,**
**daß** die Wiedergabeanordnung (4) die Video-Daten aus der Datenspeicheranordnung gemäß den in der Schnittliste eingetragenen Daten vornimmt, wobei für jeden Editierabschnitt dieses Auslesen der Video-Daten je nach Art der für den Editierabschnitt vorgesehenen Bezugnahme entweder entsprechend der in dem Editierabschnitt eingegtragenen und in der Datenspeicheranordnung (1) den Video-Daten zugeordneten Timecode-Daten oder entsprechend einer Bezugnahme auf wenigstens einen Teil einer bereits existierenden Schnittliste (5) erfolgt.

## Claims

1. Editing device (2) for editing video data stored in a data storage device (1), wherein the video data are marked by means of assigned timecode data, and wherein the editing device (2) creates an editing list (3) during editing, **characterized in that**, during the creation of a new editing list (3) the editing device (2) alternatively marks the data provided for an editing section in conformity with the timecode data assigned to said data in the data storage device (1), or with reference to at least a part of at least one, already existing editing list (5), in which the same data has already been marked, wherein, within an editing list (3) to be created, one of the modes of creation is selectable for a respective editing section, but both modes of creation can be used in a mixed form within the editing list (3).

2. The editing device of Claim 1, **characterized in that** the editing device (2) marks the data provided for an editing section with reference to an existing editing list (5) in such a way that, for this editing section, the editing list (3) to be created exclusively refers to the existing editing list (5).

3. The editing device of Claim 1 or 2, **characterized in that** basic lists for data and assigned time codes exist in the editing device (2), and **in that** the editing device (2) refers to said basic lists for marking the data provided for an editing section in conformity with the timecode data assigned to said data in the data storage device (1).

4. The editing device of one of Claims 1 to 3, **characterized in that** the editing device performs a nonlinear editing operation.

5. Reproduction device (4) for reproducing video data stored in a data storage device (1) in conformity with an editing list (3) created by means of an editing device (2) as claimed in one of Claims 1 to 4, **characterized in that** the reproduction device (4) reads the video data from the data storage device in conformity with the data from the editing list, wherein, dependent on the type of reference provided for each editing section, reading the video data for each editing section is performed either in conformity with the timecode data the entered for the editing section as assigned to the video data in the data storage device (1), or in conformity with a reference to a part of an existing editing list (5).

## Revendications

1. Dispositif de montage (2) pour le montage de données vidéo enregistrées sur un dispositif d'enregistrement de données (1), où les données vidéo sont marquées au moyen de données de code temporel associées, et où le dispositif de montage (2) crée une liste de montage (3) lors du montage,
**caractérisé en ce que**
le dispositif de montage (2) réalise, lors de la création d'une nouvelle liste de montage (3), une identification des données prévues pour une section de montage, de manière alternative, en fonction des données de code temporel associées à ces données dans le dispositif d'enregistrement de données (1) ou au moyen d'une référence à au moins une partie d'au moins une liste de montage (5) déjà existante, dans laquelle une identification desdites données est déjà obtenue, où, dans une liste de montage (3) devant être créée, un des types de création peut être à chaque fois choisi pour une section de montage, les deux types de création pouvant cependant être utilisés de manière mixte dans la liste de montage (3).

2. Dispositif de montage selon la revendication 1, **caractérisé en ce que**
le dispositif de montage (2) réalise une identification des données prévues pour une section de montage à l'aide d'une liste de montage (5) déjà créée, de telle manière qu'il soit fait référence exclusivement à la liste de montage (5) déjà existante pour la section de montage concernée dans la liste de montage (3) à créer.

3. Dispositif de montage selon la revendication 1 ou 2, **caractérisé en ce que** des listes de base pour des données et des codes temporels associés à celles-ci existent dans le dispositif de montage (2) et **en ce que** le dispositif de montage (2) se reporte aux listes de base pour une identification des données prévues pour une section de montage en fonction des données de code temporel associées à ces données dans le dispositif d'enregistrement de données (1).

4. Dispositif de montage selon une des revendications 1 à 3, **caractérisé en ce que** le dispositif de montage réalise un montage non linéaire.

5. Dispositif de reproduction (4) pour la reproduction de données vidéo enregistrées sur un dispositif d'enregistrement de données (1) en fonction d'une liste de montage (3) créée au moyen d'un dispositif de montage (2) selon une des revendications 1 à 4, **caractérisé en ce que**
le dispositif de reproduction (4) traite les données vidéo provenant du dispositif d'enregistrement de données conformément aux données contenues dans la liste de montage, où pour chaque section de montage, cette lecture des données vidéo a lieu en fonction du type de la référence prévue pour la section de montage, soit en fonction des données de code temporel contenues dans la section de montage et dans le dispositif d'enregistrement de données (1) et associées aux données vidéo, soit en fonction d'une référence à au moins une partie d'une liste de montage (5) déjà existante.
